# EUROPÄISCHE PATENTSCHRIFT

(11) **EP 1 325 217 B1**
(45) Veröffentlichungstag und Bekanntmachung des Hinweises auf die Patenterteilung: **26.04.2006**
(21) Anmeldenummer: 01982156.0
(22) Anmeldetag: 27.09.2001
(51) Int. Cl.: F01N 3/20, B01F 5/04, B01F 15/02

(54) **VORRICHTUNG ZUR ERZEUGUNG EINES REDUKTIONSMITTEL-LUFT-GEMISCHES**
DEVICE FOR GENERATING A REDUCING AGENT/AIR MIXTURE
DISPOSITIF DE PRODUCTION D'UN MELANGE REDUCTEUR-AIR

(30) Priorität: 29.09.2000 DE 10048246
(43) Veröffentlichungstag der Anmeldung: 09.07.2003
(73) Patentinhaber: ROBERT BOSCH GMBH, 70442 Stuttgart (DE)
(72) Erfinder: HUBER, Sven, 83404 Ainring-Mitterfelden (DE); MAYER, Hanspeter, A-2753 Markt Piesting (AT)
(86) Internationale Anmeldenummer: PCT/DE2001/003712
(87) Internationale Veröffentlichungsnummer: WO 2002/027160

(56) Entgegenhaltungen:
- EP-A- 0 586 913
- DE-A- 19 750 138
- US-A- 3 761 066
- US-A- 4 563 782
- US-A- 6 036 434
- ANONYMOUS: "Selective Catalytic Reduction" DIESELNET TECHNOLOGY GUIDE, XX, XX, August 2000 (2000-08), Seiten 1-12, XP002163384

## Beschreibung

### Stand der Technik

Die Erfindung geht aus von einer Vorrichtung zur Erzeugung eines Reduktionsmittel-Luft-Gemisches nach der Gattung des Anspruchs 1.

Eine solche Vorrichtung ist aus der Literatur, Dieselmotor-Management, Vieweg Verlag, 2.Auflage 1998, Seite 31, bekannt. Diese Vorrichtung ist Teil eines Systems zur Nachbehandlung von Abgasen von Brennkraftmaschinen, insbesondere selbstzündenden Brennkraftmaschinen. Durch die Zugabe eines Reduktionsmittels zum Abgas kann die Wirksamkeit eines Reduktionskatalysators zur Verringerung von Stickoxiden im Abgas verbessert werden. Die Vorrichtung weist eine Förderpumpe auf, durch die Reduktionsmittel gefördert wird und die ein Pumpengehäuse aufweist. Die Vorrichtung weist außerdem einen Mischraum auf, in welchen von der Förderpumpe gefördertes Reduktionsmittel und Luft einbringbar ist, um das Reduktionsmittel-Luft-Gemisch zu erzeugen. Der Mischraum ist in einem Mischraumkörper ausgebildet, der getrennt von der Förderpumpe angeordnet ist. Die Vorrichtung weist dadurch eine große Baugröße auf und zwischen der Förderpumpe und dem Mischraum ist eine Verbindungsleitung erforderlich, durch die die Fertigung und Montage der Vorrichtung aufwendig ist und bei deren Verbindungen die Gefahr von Undichtigkeiten besteht. Die bekannte Vorrichtung besitzt außerdem ein großes mit dem Reduktionsmittel gefülltes Totvolumen, durch das die Dynamik der Vorrichtung bei wechselnder Bedarfsmenge an Reduktionsmittel-Luft-Gemisch nachteilig beeinflußt wird.

Aus der EP 0586913 ist eine Zerstäubereinrichtung mit einer Mischeinrichtung bekannt, bei der eine Vermischung eines Mediums mit Druckgas erfolgt.

### Vorteile der Erfindung

Die erfindungsgemäße Vorrichtung mit den Merkmalen gemäß Anspruch 1 hat demgegenüber den Vorteil, daß diese eine geringe Baugröße aufweist. Außerdem ist die Fertigung und Montage der Vorrichtung vereinfacht, da keine lange Verbindungsleitung zwischen der Förderpumpe und dem Mischraum erforderlich ist. Schließlich ist durch die Anordnung des Mischraumkörpers direkt am Pumpengehäuse das mit Reduktionsmittel gefüllte Totvolumen der Vorrichtung verringert, so daß die Dynamik der Vorrichtung verbessert ist. Durch das verringerte Totvolumen wird auch weniger Energie zum Auftauen bzw. Verhindern des Gefrierens des Reduktionsmittels benötigt.

In den abhängigen Ansprüchen sind vorteilhafte Ausgestaltungen und Weiterbildungen der erfindungsgemäßen Vorrichtung angegeben. Die Ausbildung gemäß Anspruch 2 ermöglicht einen einfachen Aufbau der Vorrichtung. Durch die die Ausbildung gemäß Anspruch 3 wird eine geringe Baulänge der Vorrichtung in Richtung der Welle des Antriebsmotors erreicht. Durch die Ausbildung gemäß Anspruch 5 wird ein Rückströmen von Reduktionsmittel-Luft-Gemisch in die Förderpumpe vermieden. Die Ausbildung gemäß Anspruch 6 ermöglicht eine besonders einfache Ausbildung des Rückschlagventils.

### Zeichnung

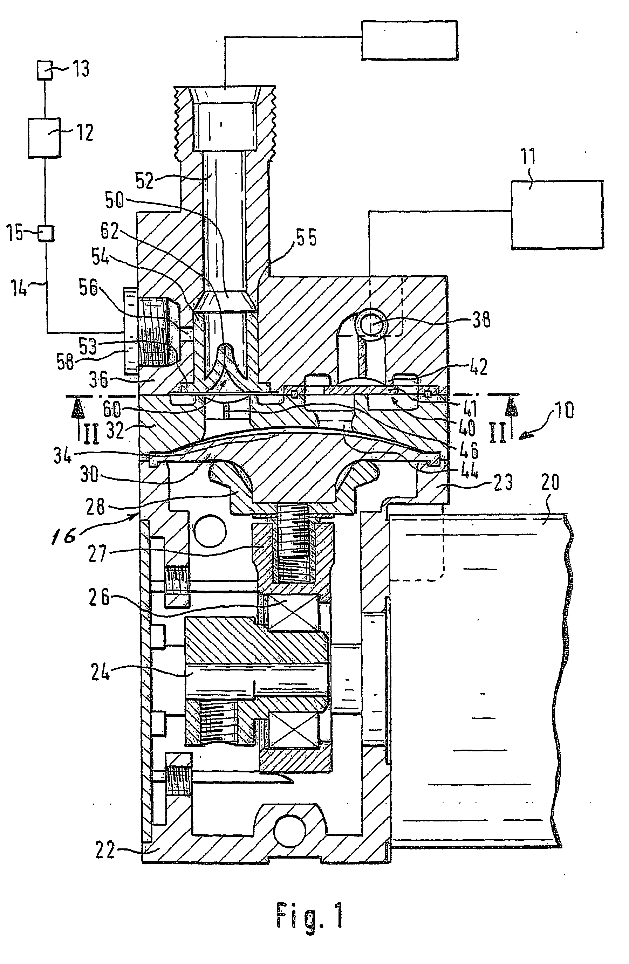

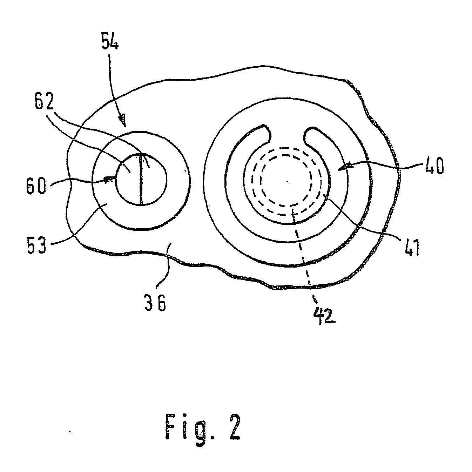

Ein Ausführungsbeispiel der Erfindung ist in der Zeichnung dargestellt und in der nachfolgenden Beschreibung näher erläutert. Es zeigen Figur 1 eine Vorrichtung zur Erzeugung eines Reduktionsmittel-Luft-Gemisches in einem Längsschnitt und Figur 2 die Vorrichtung in einem Querschnitt entlang Linie II-II in Figur 1.

### Beschreibung des Ausführungsbeispiels

In den Figuren 1 und 2 ist eine Vorrichtung 10 zur Erzeugung eines Reduktionsmittel-Luft-Gemisches dargestellt, die Bestandteil eines Systems zur Nachbehandlung von Abgas einer selbstzündenden Brennkraftmaschine ist. Das System weist einen Behälter 11 für Reduktionsmittel auf, das vorzugsweise eine wässrige Harnstofflösung oder eine sonstige Amoniakhaltige Lösung sein kann. Das System weist außerdem einen Druckluftspeicher 12 auf, in den mittels eines Kompressors 13 Luft gefördert und Druck erzeugt wird. Aus dem Druckluftspeicher 13 wird über eine Leitung 14 beispielsweise in Form eines Schlauchs oder in anderer Form, zu deren Steuerung ein Ventil 15 vorgesehen ist, Druckluft der Vorrichtung 10 zugeführt. Die Vorrichtung 10 weist eine Förderpumpe 16 auf, durch die Reduktionsmittel aus dem Behälter 11 gefördert wird, das in der Vorrichtung 10, wie nachfolgend noch näher erläutert wird, mit der zugeführten Druckluft gemischt wird und das Reduktionsmittel-Luft-Gemisch und gegebenenfalls ein Wandfilm des Reduktionsmittels entsteht. Das erzeugte Reduktionsmittel-Luft-Gemisch wird über eine Leitung 17 einem Reduktionskatalysator 18 zugeführt.

Die Förderpumpe 16 der Vorrichtung 10 weist einen elektrischen Antriebsmotor 20 auf, der vorzugsweise als Schrittmotor ausgebildet ist. Bei Verwendung eines Schrittmotors 20 entspricht jedem Schritt, mit dem dieser betrieben wird, einer definierten Fördermenge der Förderpumpe 16, so daß durch Betrieb des Schrittmotors 20 mit einer bestimmten Schrittzahl eine vorgegebene Menge an Reduktionsmittel durch die Förderpumpe 16 gefördert wird. Der Betrieb des Schrittmotors 20 wird durch eine nicht dargestellte Steuereinrichtung gesteuert, so daß durch die Förderpumpe 16 die im jeweiligen Betriebszustand der Brennkraftmaschine erforderliche Menge an Reduktionsmittel gefördert wird.

Die Förderpumpe 16 weist ein Pumpengehäuse mit einem Gehäuseteil 22 auf, mit dem der Antriebsmotor 20 verbunden ist. Der Antriebsmotor 20 weist eine in das Gehäuseteil 22 ragende Welle 24 auf, mit der über ein Exzenterlager 26 ein Exzenterstößel 27 gekoppelt ist, der sich nicht mit der Welle 24 mitdreht, sondern drehfest, jedoch radial zur Welle 24 bewegbar im Gehäuseteil 22 angeordnet ist. Der Exzenterstößel 27 wird bei einer Drehbewegung der Welle 24 durch das Exzenterlager 26 in einer Hubbewegung angetrieben, die er über eine Abstützung 28 auf eine Membran 30 als Förderelement der Förderpumpe 16 überträgt. Die Membran 30 ist an ihrem Rand zwischen einem Flanschbereich 23 des Gehäuseteils 22 und einer mit diesem verbundenen, ebenfalls einen Teil des Pumpengehäuses bildenden Zwischenplatte 32 eingespannt. Die Membran 30 sowie der Flansch 23 des Gehäuseteils 22 und die Zwischenplatte 32 sind im Querschnitt beispielsweise gerundet ausgebildet. Zwischen der Membran 30 und der Zwischenplatte 32 ist ein Arbeitsraum 34 der Förderpumpe 16 begrenzt. Die Zwischenplatte 32 ist etwa radial zur Welle 24 des Antriebsmotors 20 angeordnet.

An die Zwischenplatte 32 schließt sich als weiteres Teil des Pumpengehäuses ein Mischraumkörper 36 an, der mit der Zwischenplatte 32 und/oder dem Gehäuseteil 22 verbunden ist, beispielsweise verschraubt ist, und der ein Deckelteil des Pumpengehäuses bildet. Der Mischraumkörper 36 ist etwa radial zur Welle 24 des Antriebsmotors 20 angeordnet und ist im Querschnitt entsprechend der Zwischenplatte 32 beispielsweise gerundet ausgebildet. Am Außenmantel des Mischraumkörpers 36 ist ein Anschluß 38 für eine zum Behälter 11 führende Leitung angeordnet, der in den Arbeitsraum 34 mündet. Zwischem dem Anschluß 38 und dem Arbeitsraum 34 ist ein in den Arbeitsraum 34 öffnendes Rückschlagventil 40 angeordnet. Das Rückschlagventil 40 ist als Membranventil ausgebildet, dessen Membran an ihrem Rand zwischen der Zwischenplatte 32 und dem Mischraumkörper 36 eingespannt ist und die einen teilweise freigeschnittenen mittleren Bereich 41 aufweist, der ein bewegliches Ventilglied bildet, das mit dem Stirnende eines am Mischraumkörper 36 ausgebildeten Stutzens 42 als Ventilsitz zusammenwirkt, in den der Anschluß 38 mündet. Bei geschlossenem Rückschlagventil 40 kommt dessen Ventilglied 41 am Stirnende des Stutzens 42 zur Anlage und verschließt diesen, so daß beim Förderhub der Membran 30 aus dem Arbeitsraum 34 kein Reduktionsmittel über den Anschluß 38 zurück in den Behälter 11 gelangen kann. Beim Saughub der Membran 30 ist das Rückschlagventil 40 geöffnet, wobei dessen Ventilglied 41 vom Stirnende des Stutzens 42 abhebt, so daß Reduktionsmittel in den Arbeitsraum 34 einströmen kann. In der Zwischenplatte 32 ist eine Einlaßöffnung 44 für das in den Arbeitsraum 34 einströmende Reduktionsmittel ausgebildet.

In der Zwischenplatte 34 ist außerdem eine Auslaßöffnung 46 für das von der Förderpumpe 16 beim Förderhub der Membran 30 verdrängte Reduktionsmittel ausgebildet. Die Auslaßöffnung 46 mündet in einen im Mischraumkörper 36 ausgebildeten Mischraum 50, in dem das geförderte Reduktionsmittel mit Luft gemischt wird. Der Mischraumkörper 36 weist eine etwa koaxial zur Auslaßöffnung 46 der Zwischenplatte 32 angeordnete Bohrung 52, die sich von der Zwischenplatte 32 weg in einem etwa konischen Übergangsbereich im Durchmesser verringert, wobei der Mischraum 50 in diesem Übergangsbereich ausgebildet ist. In den der Zwischenplatte 32 zugewandten Abschnitt der Bohrung mit dem größeren Durchmesser ist eine elastisch zusammendrückbare Hülse 54 eingepresst. Die Hülse 54 kann vorzugsweise aus Gummi oder einem elastischen Kunststoff bestehen. In nicht zusammengedrücktem Zustand liegt die Hülse 54 dicht am Umfang der Bohrung 52 an. Am Umfang der Bohrung 52 mündet im Bereich der Hülse 54 eine Druckluftzulaufbohrung 56, die mit einem am Außenmantel des Mischraumkörpers 36 angeordneten Durckluftanschluß 58 verbunden ist, an den die vom Druckluftspeicher 12 herführende Leitung 14 angeschlossen ist.

Die Bohrung 52 setzt sich in ihrem Abschnitt mit kleinerem Durchmesser am Mischraumkörper 36 in einem an diesem einstückig angeformten Stutzen 58 fort. Zwischen dem Mischraum 50 und dem Arbeitsraum 34 der Förderpumpe 16 ist ein in den Mischraum 50 öffnendes Rückschlagventil 60 angeordnet, durch das verhindert wird, daß beim Saughub der Förderpumpe 16 ein Ansaugen aus dem Mischraum 50 erfolgt. Das Rückschlagventil 60 ist vorzugsweise als sogenanntes Entenschnabelventil ausgebildet und weist einstückig an der Hülse 54 angeformte, zwei oder mehr von dieser nach innen abstehende Lippen 62 auf, die elastisch verformbar sind. Die Lippen 62 sind an ihren der Zwischenplatte 32 zugewandten Enden an der Hülse 54 angeformt und verlaufen von der Zwischenplatte 32 weg nach innen in die Hülse 54. Die Lippen 62 liegen mit ihren freien Enden dicht aneinander an und verschließen die Hülse 54. Beim Förderhub der Förderpumpe 16 werden die Lippen 62 durch den auf diese wirkenden Druck radial voneinander wegbewegt, so daß diese einen Durchgang durch die Hülse 54 freigeben und Reduktionsmittel aus dem Arbeitsraum 34 durch die Hülse 54 in den Mischraum 50 gelangen kann. In geschlossenem Zustand, wenn die Lippen 62 dicht aneinander anliegen, verhindert das Rückschlagventil 60 ein Einströmen von Druckluft aus dem Mischraum 50 in den Arbeitsraum 34 der Förderpumpe 16, da der Druck im Mischraum 50 das Rückschlagventil 60 schließt. Der in der Bohrung 52 liegende Abschnitt der Hülse 54 bildet ein Rückschlagventil, durch das die Druckluftzulaufbohrung 56 verschlossen wird, wenn keine Druckluft zugeführt wird und somit ein Eindringen von Reduktionsmittel in die Druckluftzulaufbohrung 56 verhindert. Die Hülse 54 weist an ihrem der Zwischenplatte 32 zugewandten Ende einen im Durchmesser vergrößerten Flansch 53 auf, der zwischen der Zwischenplatte 32 und dem Mischraumkörper 36 festgelegt ist, wodurch verhindert wird, daß die Hülse 54 in der Bohrung 52 in Richtung von deren Längsachse verschiebbar ist. Die Lippen 62 des Rückschlagventils 60 liegen unter Vorspannung aneinander an und verhindern dadurch ein Nachtropfen von flüssigem Reduktionsmittel.

Zur Erzeugung des Reduktionsmittel-Luft-Gemisches wird die Förderpumpe 16 mittels des Antriebsmotors 20 derart betrieben, daß diese die erforderliche Menge an Reduktionsmittel fördert, die in den Mischraum 50 gelangt. Außerdem wird über den Druckluftzulauf Druckluft zugeführt, wobei die Hülse 54 durch die Druckluft elastisch zusammengedrückt wird, so daß zwischen dieser und der Bohrung 52 ein Ringspalt 55 entsteht, durch den die Druckluft in den Mischraum 50 gelangen kann. Im Mischraum 50 erfolgt eine möglichst gleichmäßige Vermischung des Reduktionsmittels mit der Druckluft und das erzeugte Reduktionsmittel-Luft-Gemisch gelangt in den Stutzen 58 des Mischraumkörpers 36. Am Stutzen 58 ist die Leitung 17 angeschlossen, über die das erzeugte Reduktionsmittel-Luft-Gemisch dem Reduktionskatalysator 18 zugeführt wird.

Die Vorrichtung 10 weist nur ein geringes Totvolumen auf, das nach Beendigung des Betriebs der Förderpumpe 16 mit Reduktionsmittel gefüllt ist. Das Totvolumen besteht aus dem Volumen des Arbeitsraums 34, dem in der Zwischenplatte 32 in der Einlaßöffnung 44 und der Auslaßöffnung 46 begrenzten Volumen und dem zwischen der Zwischenplatte 32 und dem Mischraumkörper 36 begrenzten Volumen. Infolge dieses geringen Totvolumens besitzt die Vorrichtung 10 eine gute Dynamik, wenn sich ändernde Mengen an Reduktionsmittel-Luft-Gemisch erforderlich sind. Nach Beendigung des Betriebs der Förderpumpe 16 wird vorzugsweise für eine bestimmte Zeitdauer dem Mischraum 50 weiterhin Druckluft zugeführt, um Reste des Reduktionsmittels zu entfernen, die dort eintrocknen und die weitere Funktion der Vorrichtung 10 beeinträchtigen könnten. Durch die direkte Anordnung des Mischraumkörpers 36 am Pumpengehäuse weist die Vorrichtung 10 eine kompakte Bauform auf, wobei durch die radiale Anordnung des Mischraumkörpers 36 die Baulänge der Vorrichtung 10 in Richtung der Welle 24 des Antriebsmotors 20 nicht vergrößert wird. Die Vorrichtung 10 kann nach deren Zusammenbau bereits auf ihre Funktion überprüft werden, so daß eine Fehlfunktion frühzeitig erkannt und behoben werden kann.

## Patentansprüche

1. Vorrichtung zur Erzeugung eines Reduktionsmittel-Luft-Gemisches mit einer Förderpumpe (16), durch die Reduktionsmittel gefördert wird und die ein Pumpengehäuse (22,32) aufweist, und mit einem Mischraum (50), in welchen von der Förderpumpe (16) gefördertes Reduktionsmittel und Luft einbringbar sind, wobei der Mischraum (50) in einem Mischraumkörper (36) ausgebildet ist, **dadurch gekennzeichnet, daß** der Mischraumkörper (36) mit dem Pumpengehäuse (22,32) der Förderpumpe (16) verbunden ist, wobei der Mischraum (50) in einer Bohrung (52) des Mischraumkörpers (36) ausgebildet ist, wobei in die Bohrung (52) eine elastisch zusammendrückbare Hülse (54) eingepreßt ist und wobei am Umfang der Hülse (54) in die Bohrung (52) ein Luftzulauf (56) mündet, wobei die Hülse (54) durch die unter Druck zugeführte Luft elastisch zusammendrückbar ist, so daß Luft durch einen sich zwischen der Bohrung (52) und der Hülse (54) bildenden Ringspalt (55) in den Mischraum (50) gelangen kann.

2. Vorrichtung nach Anspruch 1, **dadurch gekennzeichnet, daß** der Mischraumkörper (36) einen Deckel des Pumpengehäuses (22,32) bildet.

3. Vorrichtung nach Anspruch 1 oder 2, **dadurch gekennzeichnet, daß** die Förderpumpe (16) eine Antriebswelle (24) für ein Förderelement (30) aufweist, die in das Pumpengehäuse (22) der Förderpumpe (16) ragt und daß der Mischraumkörper (36) zumindest annähernd radial zur Antriebswelle (24) angeordnet ist.

4. Vorrichtung nach einem der Ansprüche 1 bis 3, **dadurch gekennzeichnet, daß** am Mischraumkörper (36) ein Reduktionsmittelzuführanschluß (38) angeordnet ist und daß zwischen diesem und einem Arbeitsraum (34) der Förderpumpe (16) ein in den Arbeitsraum (34) öffnendes Rückschlagventil (40) angeordnet ist.

5. Vorrichtung nach einem der Ansprüche 1 bis 4, **dadurch gekennzeichnet, daß** zwischen einem Auslaß (46) der Förderpumpe (16) und dem Mischraum (50) ein weiteres, in den Mischraum (50) öffnendes Rückschlagventil (60) angeordnet ist.

6. Vorrichtung nach Anspruch 5, **dadurch gekennzeichnet, daß** das weitere Rückschlagventil (60) mit der Hülse (54) einstückig ausgebildet ist in Form von dieser nach innen abstehender Lippen (62), die dichtend aneinander anliegen und die unter der Wirkung des von der Förderpumpe (16) erzeugten Förderdrucks zur Freigabe eines Durchgangs voneinander wegbewegbar sind.

7. Vorrichtung nach einem der vorstehenden Ansprüche, **dadurch gekennzeichnet, daß** am Mischraumkörper (36) einstückig ein vom Mischraum (50) abführender Stutzen angeformt ist, durch den das erzeugte Reduktionsmittel-Luft-Gemisch austritt.

8. Vorrichtung nach einem der vorstehenden Ansprüche, **dadurch gekennzeichnet, daß** die Förderpumpe (16) einen als Schrittmotor ausgebildeten elektrischen Antriebsmotor (20) aufweist.

## Claims

1. Device for generating a reducing agent/air mixture, having a delivery pump (16), by which reducing agent is delivered and which has a pump casing (22, 32), and having a mixing space (50), into which reducing agent delivered by the delivery pump (16) and air can be introduced, the mixing space (50) being formed in a mixing-space body (36), **characterized in that** the mixing-space body (36) is connected to the pump casing (22, 32) of the delivery pump (16), the mixing space (50) being formed in a bore (52) in the mixing-space body (36), an elastically compressible sleeve (54) being pressed into the bore (52), and an air inlet (56) opening out into the bore (52) at the periphery of the sleeve (54), it being possible for the sleeve (54) to be elastically compressed by the air, which is supplied under pressure, so that air can pass into the mixing space (50) through an annular gap (55) which is formed between the bore (52) and the sleeve (54).

2. Device according to Claim 1, **characterized in that** the mixing-space body (36) forms a cover of the pump casing (22, 32).

3. Device according to Claim 1 or 2, **characterized in that** the delivery pump (16) has a drive shaft (24) for a delivery element (30), which drive shaft projects into the pump casing (22) of the delivery pump (16), and **in that** the mixing-space body (36) is arranged at least approximately radially with respect to the drive shaft (24).

4. Device according to one of Claims 1 to 3, **characterized in that** a reducing-agent feed connection (38) is arranged on the mixing-space body (36), and **in that** a nonreturn valve (40), which opens into the working space (34), is arranged between this reducing-agent feed connection (38) and a working space (34) of the delivery pump (16).

5. Device according to one of Claims 1 to 4, **characterized in that** a further nonreturn valve (60), which opens into the mixing space (50), is arranged between an outlet (46) of the delivery pump (16) and the mixing space (50).

6. Device according to Claim 5, **characterized in that** the further nonreturn valve (60) is formed integrally with the sleeve (54), in the form of lips (62) which protrude inwards from the sleeve, bear in a sealing manner against one another and can be moved away from one another, to open up a passage, under the action of the delivery pressure generated by the delivery pump (16).

7. Device according to one of the preceding claims, **characterized in that** a connection piece (42), which leads out of the mixing space (50) and through which the reducing agent/air mixture which has been generated emerges, is formed integrally on the mixing-space body (36).

8. Device according to one of the preceding claims, **characterized in that** the delivery pump (16) has an electric drive motor (20) designed as a stepper motor.

## Revendications

1. Dispositif de production d'un mélange réducteur-air équipé d'une pompe d'alimentation (16) permettant de transporter le réducteur et présentant un corps de pompe (22, 23) et équipé d'une chambre de mélange (50) dans laquelle sont amenés le réducteur transporté par la pompe d'alimentation (16) et l'air, la chambre de mélange (50) étant conçue dans un corps de chambre de mélange (36),
**caractérisé en ce que**
le corps de chambre de mélange (36) est relié au corps de pompe (22, 32) de la pompe d'alimentation (16), la chambre de mélange (50) étant conçue dans un alésage (52) du corps de chambre de mélange (36), une douille (54) pouvant être comprimée élastiquement est enfoncée dans l'alésage (52) et une conduite d'amenée d'air (56) débouche à la périphérie de la douille (54) dans l'alésage (52), la douille (54) pouvant être comprimée élastiquement par l'air amené sous pression de manière à ce que l'air puisse arriver dans la chambre de mélange (50) par une fente annulaire (55) se formant entre l'alésage (52) et la douille (54).

2. Dispositif selon la revendication 1,
**caractérisé en ce que**
le corps de chambre de mélange (36) forme un couvercle du corps de pompe (22, 32).

3. Dispositif selon la revendication 1 ou 2,
**caractérisé en ce que**
la pompe d'alimentation (16) présente un arbre d'entraînement (24) pour un élément d'alimentation (30) qui entre dans le corps de pompe (22) de la pompe d'alimentation (16) et le corps de chambre de mélange (36) est disposé au moins approximativement radialement par rapport à l'arbre d'entraînement (24).

4. Dispositif selon l'une quelconque des revendications 1 à 3,
**caractérisé en ce qu'**
un raccordement d'alimentation en réducteur (38) est placé sur le corps de chambre de mélange (36), et un clapet anti-retour (40) s'ouvrant dans la chambre de travail (34) est disposé entre ce raccordement et une chambre de travail (34) de la pompe d'alimentation (16).

5. Dispositif selon l'une quelconque des revendications 1 à 4,
**caractérisé en ce qu'**
un autre clapet anti-retour (60) s'ouvrant dans la chambre de mélange (50) est disposé entre une sortie (46) de la pompe d'alimentation (16) et la chambre de mélange (50).

6. Dispositif selon la revendication 5,
**caractérisé en ce que**
l'autre clapet anti-retour (60) est formé d'un seul tenant avec la douille (54) sous la forme de lèvres (62) écartées de cette douille vers l'intérieur, adjacentes les unes aux autres de manière hermétique et mobiles les unes par rapport aux autres sous l'effet de la pression d'alimentation générée par la pompe d'alimentation (16) pour dégager un passage.

7. Dispositif selon l'une quelconque des revendications précédentes,
**caractérisé en ce qu'**
une tubulure (42) menant hors de la chambre de mélange (50) et permettant au mélange réducteur-air généré de sortir est formée d'une seule pièce sur le corps de chambre de mélange (36).

8. Dispositif selon l'une quelconque des revendications précédentes,
**caractérisé en ce que**
la pompe d'alimentation (16) présente un moteur d'entraînement électrique (20) conçu sous forme de moteur pas à pas.
